# FASCICULE DE BREVET EUROPEEN

(11) **EP 4 355 544 B1**
(45) Date de publication et mention de la délivrance du brevet: **30.04.2025**
(21) Numéro de dépôt: 22736325.6
(22) Date de dépôt: 08.06.2022
(51) Int. Cl.: B29B 17/02, B29B 17/04, C08J 11/08, B29K 69/00

(54) **PROCEDE DE RECYCLAGE ET DE VALORISATION DE DECHETS COMPOSITES A BASE DE POLYCARBONATE**
VERFAHREN ZUR WIEDERVERWERTUNG UND AUFWÄRTSVERWERTUNG VON VERBUNDSTOFFABFÄLLEN AUF POLYCARBONATBASIS
METHOD FOR RECYCLING AND UPCYCLING POLYCARBONATE-BASED COMPOSITE WASTE

(30) Priorité: 17.06.2021 FR 2106465
(43) Date de publication de la demande: 24.04.2024
(73) Titulaire: Polyloop, 26750 Genissieux (FR)
(72) Inventeur: FERRARI, Romain, 69006 Lyon (FR); FAYSSE, Gabriel, 26750 Génissieux (FR); DUAUX, Gabriel, 38090 Villefontaine (FR)
(74) Mandataire: Cabinet Laurent & Charras
(86) Numéro de dépôt international: PCT/FR2022/051080
(87) Numéro de publication internationale: WO 2022/263745

(56) Documents cités:
- WO-A1-2012/158775
- CN-A- 105 778 459
- JP-A- 2001 270 961
- JP-A- 2019 104 861

## Description

### Domaine de l'invention

La présente invention se rapporte au domaine technique des procédés physico-chimiques de recyclage de déchets composites à base de polycarbonate.

L'invention se rapporte plus spécifiquement au domaine des procédés de dissolution du polymère des déchets composites à base de polycarbonate, au moyen d'un solvant afin de pouvoir récupérer les fragments insolubles d'une part, mais aussi et surtout de pouvoir récupérer la formulation polycarbonate d'autre part, après retraitement du polycarbonate dissous dans le solvant, pour leur réutilisation ultérieure.

### État antérieur de la technique

Le polycarbonate, généralement de formule -[CO-O-pPh-C(CH₃)₂-pPh-O]ₙ (où n est le nombre d'unités et Ph est un radical divalent phényle), est un polymère formant matière plastique, connu depuis 1953 et commercialisé depuis 1958. Ce polymère est issu généralement de la polycondensation du bisphénol A et d'un carbonate ou du phosphogène. Le polycarbonate est un polymère disposant de très bonnes propriétés, en particulier mécaniques (résistance aux chocs et aux fractures), pouvant présenter une bonne transparence, difficilement inflammable et possédant une grande résistance thermique, permettant son utilisation entre - 100°C et + 120°C. Il est également bon isolant électrique et possède une biocompatibilité.

Les polymères de polycarbonate sont largement utilisés pour la fabrication de divers articles de la vie quotidienne, notamment dans les domaines automobiles (corps de rétroviseurs, feux et phares), des équipements électriques et électroniques (boîtiers de téléphone et d'ordinateurs), des emballages et des appareils électroménagers.

Pour ces raisons, de grandes quantités de ce matériau sont mises au rebut chaque année. Le processus de son recyclage constitue par conséquent un enjeu écologique et économique majeur. Le recyclage mécanique du polycarbonate seul est généralement aisé. Cependant, la présence d'inserts en particulier métalliques dans les déchets composites à base de polycarbonate rend ce recyclage impossible. En effet, lorsque l'objet à recycler comprend un insert tel qu'une bande magnétique ou une puce (dans le cas par exemple d'une carte d'identité française ou d'une carte bancaire française) ou des fibres, cela ne permet pas d'obtenir des éléments (métaux, fibres, polycarbonate) de haute pureté et valorisables par réutilisation.

En effet, un broyage minutieux de ces articles conduit généralement à un mélange de fines particules de composition hétérogène. Ce mélange est difficile à purifier et à réutiliser.

Le document JP 2019104861 A décrit un procédé de traitement chimique pour recyclage de déchets composites comprenant une résine thermoplastique, telle que du polycarbonate, renforcée par des fibres de carbone. Ce solvant est soit un mélange de 1,3-dioxolane, de tétrahydrofurane (THF) et de N-méthyl-2-pyrrolidone (NMP) soit un mélange de 1,3-dioxolane et de tétrahydrofurane (THF). En fin de traitement, il est conduit une distillation et le concentré de distillation est mélangé à de l'éthanol pour précipiter le polycarbonate. Le solvant final contenant de l'éthanol ne peut pas être recyclé dans le procédé.

Chacun des documents WO 2012/158775 A1, CN 105778459 A et JP 2001270961 concerne le recyclage de matériau à base de polycarbonate. Cependant, aucun d'eux ne mentionne l'utilisation de 1,3-dioxolane.

À ce jour, il est connu de dissoudre le polycarbonate par au moins un solvant tel que le dichlorométhane ou le chloroforme ou le THF (tétrahydrofurane) ou la N-méthyl-3-pyrrolidone (NMP). Cependant, ces solvants sont toxiques voire CMR (Cancérigène Mutagène Reprotoxique). En outre, il n'existe pas de solution commerciale de recyclage physico-chimique (c'est-à-dire physique par voie solvant) de déchets composites à base de polycarbonate.

Il n'existe donc pas de solution satisfaisante à l'heure actuelle permettant de pallier les problèmes de la technique antérieure pour recycler de façon efficace les déchets composites à base de polycarbonate.

L'invention consiste à pallier les problèmes de l'état de la technique, en proposant un procédé de recyclage de déchets composites à base de polycarbonate permettant l'obtention séparée de leurs composants, de hautes puretés, et donc une réutilisation de ces composants.

### Exposé de l'invention

L'invention concerne un procédé de recyclage de déchets composites à base de polycarbonate comprenant les étapes suivantes :
(a) fourniture des déchets composites sous forme de morceaux ;
(b) dissolution des morceaux de déchets en présence de 1,3-dioxolane en tant que solvant, à température de 50°C à 100°C, sous atmosphère inerte à une pression de 20 000 à 300 000 Pa ;
(c) séparation du mélange issu de l'étape (b) conduisant à récupérer des fragments insolubles ainsi qu'un liquide comprenant du solvant 1,3-dioxolane et la formulation polycarbonate;
(d) précipitation du polycarbonate présent dans le liquide issu de l'étape (c) à température de 50°C à 100°C, sous atmosphère inerte à une pression de 20 000 à 100 000 Pa, en présence d'eau sous forme liquide et/ou de vapeur et d'au moins un solvant, permettant d'obtenir un effluent gazeux et des particules solides de polycarbonate.

Le procédé de recyclage de l'invention concerne le recyclage physique par voie solvant de déchets composites à base de polycarbonate par utilisation d'un couple solvant/anti-solvant sans dégradation chimique du polymère. Le solvant utilisé, le 1,3-dioxolane, ne contient pas de substance cancérigène CMR (Cancérigène Mutagène Reprotoxique), contrairement à JP 2019104861 A. L'eau et/ou la vapeur d'eau agissent comme un anti-solvant. Au moins un autre solvant est utilisé lors de l'étape (d) de précipitation.

Le procédé de recyclage de l'invention permet avantageusement de produire un polycarbonate recyclé de formulation sensiblement identique à celle du polycarbonate du déchet composite traité. Ainsi, tout additif éventuellement contenu dans le polycarbonate reste généralement dans le polycarbonate recyclé. Le polycarbonate recyclé ainsi obtenu a donc une certaine valeur économique. Enfin, un autre des avantages du procédé selon l'invention est la possibilité de régénérer les insolubles comprenant une teneur quasi nulle en polycarbonate.

### Description détaillée

Par « déchets composites », on entend selon l'invention des résidus (matériaux, substances ou produits), inutilisables tels quels, ; et comprenant au moins deux composants distincts associés et difficilement dissociables.

Par « à base de polycarbonate », on entend que les déchets comprennent au moins 50% en masse par polycarbonate. Par « polycarbonate », on entend tout homo- ou copolymère comprenant des unités -[CO-O-pPh-C(CH3)2-pPh-O] soluble dans le 1,3-dioxolane. Par « formulation polycarbonate », on entend un polycarbonate et son ou ses additifs éventuels (colorant(s), plastifiant(s),...) ainsi qu'il est connu de la personne du métier. La formulation polycarbonate est soluble dans le 1,3-dioxolane.

Les « déchets composites à base de polycarbonate » selon l'invention comprennent donc du polycarbonate et au moins une matière insoluble telle que par exemple des fibres ou des métaux typiquement sous forme d'inserts (puces électroniques...). Ce sont par exemple des cartes bancaires françaises ou des cartes d'identité plastifiées.

L'étape (a) peut être réalisée par une opération particulière, typiquement de broyage et/ou de déchiquetage, au moyen de tout appareil adéquat. Elle peut également consister simplement en la fourniture de la matière première à la taille qui convient.

Par « morceaux », on entend selon l'invention des objets de dimension moyenne de 1 cm à 20 cm. Par « fragments », on entend selon l'invention des parties issues de ces morceaux, sensiblement de plus petite dimension moyenne.

Par « A et/ou B », on entend selon l'invention A, ou B, ou A et B.

L'étape (b) est réalisée en présence de 1,3-dioxolane (solvant organique de formule C₃H₆O₂ et de numéro CAS 646-06-0) en tant que solvant, généralement dans un réacteur. Le 1,3-dioxolane forme avantageusement un azéotrope avec l'eau tout en étant capable de dissoudre le polycarbonate et non les autres composants (fibres, métal, etc) des déchets composites.

Le 1,3-dioxolane utilisé selon l'invention est de préférence pur à plus de 90% masse (« 1,3-dioxolane technique »), peut contenir de l'eau et au moins un stabilisant tel que le méthanol et/ou le méthylal. Par exemple, il contient au maximum 7% en masse d'eau, 3% en masse de méthanol et 1% en masse de méthylal. Le solvant utilisé à l'étape (b) comprend, de préférence est essentiellement constitué de, de façon plus préférée est essentiellement constitué de, un tel 1,3-dioxolane.

L'étape (b) est réalisée de préférence sous agitation, ainsi qu'il est connu de la personne du métier qui sera à même de déterminer les conditions de mélange, typiquement le type d'agitateur et la vitesse de mouvement de l'agitateur. Cette agitation permet avantageusement un meilleur contact entre le solvant 1,3-dioxolane et les déchets composites.

La personne du métier est apte à déterminer les conditions de l'étape (b) telles que la durée et la proportion déchets sur solvant 1,3-dioxolane. Typiquement, la durée est comprise entre 30 et 180 min, de préférence entre 60 et 120 min ; et la proportion déchets sur solvant 1,3-dioxolane est de 1 à 20 % en masse (ou en quantité en masse par litre de solvant 1,3-dioxolane), de préférence de 5 à 15 % en masse. En général, la quantité de solvant 1,3-dioxolane est choisie de façon à ce que l'augmentation de viscosité provoquée par la dissolution du polycarbonate soit compatible avec le bon déroulement du procédé, notamment lors de la séparation de l'étape (c).

Par « entre X et Y », ou « de X à Y », on entend ici bornes incluses.

Par « atmosphère inerte », on entend une atmosphère qui ne réagit pas lors du procédé considéré. L'atmosphère inerte est, ainsi qu'il est connu de la personne du métier, généralement une atmosphère d'air débarrassé de l'oxygène, de façon plus préférée une atmosphère de gaz neutre tel que, typiquement, l'azote.

À l'issue de l'étape (b), on dispose d'un mélange constitué d'un liquide constitué essentiellement du solvant 1,3-dioxolane dans lequel est dissous le polycarbonate (sous forme de formulation polycarbonate), et des fragments insolubles dans cette phase liquide.

L'étape (c) consiste en la séparation de ce mélange issu de l'étape (b) en ses deux constituants, à savoir d'une part les fragments insolubles et d'autre part le liquide comprenant le solvant 1,3-dioxolane et le polycarbonate. De préférence, l'étape (c) est une étape de filtration, par exemple par au moins un tamis ou tissu dont les ouvertures ont des dimensions de l'ordre de 0,01 à 10 mm. Elle peut comprendre plusieurs sous-étapes de filtration, typiquement avec une filtration de plus en plus fine, généralement dans un ou plusieurs réacteurs.

L'étape (c) peut permettre également de récupérer au moins un composant des déchets composites (tels qu'une antenne ou une étiquette). Ce composant est généralement présent à l'origine dans les morceaux de l'étape (a) et n'est généralement pas valorisable en tant que tel.

Selon un mode de réalisation, les étapes (b) et (c) sont concomitantes, c'est-à-dire qu'il existe un intervalle de temps commun pendant lequel elles sont toutes deux réalisées. De préférence, elles sont réalisées sensiblement en même temps. Cela correspond typiquement au cas où elles sont réalisées au sein d'un même réacteur qui réalise alors la dissolution et la séparation, de préférence la filtration, simultanément.

Selon un autre mode de réalisation, préféré, les étapes (b) et (c) sont successives, c'est-à-dire qu'il n'existe pas d'intervalle de temps commun pendant lequel elles sont toutes deux réalisées : elles sont réalisées l'une après l'autre. Dans ce cas-là, elles sont généralement réalisées dans au moins deux espaces différents.

De préférence, les fragments insolubles issus de l'étape (c) sont nettoyés par rinçage avec du 1,3-dioxolane, puis par évaporation et/ou distillation de façon à éliminer toute trace de 1,3-dioxolane. Cela s'effectue généralement dans le même réacteur que celui utilisé pour l'étape (c). De préférence, cette étape est une étape de nettoyage à la vapeur (communément appelé « stripping » par la personne du métier). Cette étape est le plus souvent effectuée à température de 90 à 110°C, au moyen de vapeur d'eau, ainsi qu'il est connu de la personne du métier. Cela permet une meilleure récupération, et donc un meilleur recyclage en particulier interne, du 1-3-dioxolane (par exemple pour alimenter en effluent gazeux une éventuelle étape (g) de condensation qui est suivie d'une récupération du 1,3-dioxolane pour l'étape (b) et/ou l'étape (d)). Cela permet surtout d'obtenir des fragments insolubles plus pures pour les réutiliser ultérieurement.

L'étape (d) permet, par l'injection de vapeur d'eau et/ou d'eau, de provoquer la précipitation du polycarbonate sous forme de particules solides, tout en évacuant un effluent gazeux, généralement dans un réacteur.

L'étape (d) permet également, avantageusement, de provoquer l'évaporation et l'entraînement de l'azéotrope eau - 1,3-dioxolane, sous forme gazeuse. Cet azéotrope peut ensuite être recueilli et condensé. Le liquide n'a pas été évaporé est essentiellement constitué d'eau et de particules solides de polycarbonate, de préférence constitué d'eau et de particules solides de polycarbonate. Lorsque la quasi-totalité du 1,3-dioxolane a été entraînée, il est possible de recueillir les particules de polycarbonate.

Le solvant de l'étape (d) est avantageusement un alcane choisi dans le groupe formé par l'isohexane, l'hexane, l'heptane, l'octane et le pentane. De préférence le solvant de l'étape (d) est l'isohexane.

Le solvant de l'étape (d) est de préférence en proportion de 5 à 25%, en poids, par rapport au poids total des solvants (1,3-dioxolane, eau et solvant).

L'étape (d) peut également comporter l'utilisation d'un solvant supplémentaire, compris dans le solvant de l'étape (d). Dans un tel cas, le solvant décrit précédemment de l'étape (d) peut être qualifié de solvant « principal ». Le solvant supplémentaire joue avantageusement un rôle de dispersant. Par « dispersant » on entend toute molécule permettant de limiter la coalescence des grains durant la précipitation. Le solvant supplémentaire est généralement choisi parmi les alcools, les esters, les oxolanes, les éthers et les cétones ayant une température d'ébullition comprise entre celle du 1,3-dioxolane et celle de l'eau. Le solvant supplémentaire est de préférence choisi dans le groupe formé par l'isopropanol, l'acétate de propyle, le 2-méthyl-1,3-dioxolane et le diméthoxyéthane. De façon préférée, le solvant supplémentaire est l'isopropanol.

Le solvant supplémentaire est de préférence en proportion de 1 à 10%, en poids par rapport au poids total de solvants (1,3-dioxolane, eau et/ou vapeur et autre(s) solvant(s) dont le solvant et le solvant supplémentaire).

L'étape (d) est réalisée de préférence sous agitation, ainsi qu'il est connu de la personne du métier qui sera à même de déterminer les conditions de mélange, typiquement le type d'agitateur et la vitesse de mouvement de l'agitateur. Avantageusement, cette agitation permet une meilleure répartition de la vapeur dans le volume et permet une granulation du polycarbonate. Bien qu'il ne soit mentionné par la suite que les « grains de polycarbonate », la composition des grains de polycarbonate correspond sensiblement à la formulation initiale de polycarbonate.

Lors de l'étape (d), les constituants du mélange de solvants (c'est-à-dire le 1,3-dioxolane, l'eau et le ou les solvants de l'étape (d)) permettent de favoriser la séparation entre la phase aqueuse et la phase organique des effluents gazeux condensés.

La personne du métier est apte à déterminer les conditions de l'étape (d) telles que la durée, la proportion de 1,3-dioxolane dans le mélange de solvants et la proportion d'eau et/ou de vapeur d'eau par rapport au mélange de solvants. Typiquement, la durée est comprise entre 30 et 240 min, de préférence entre 60 et 180 min. En général, la proportion de 1,3-dioxolane dans le mélange de solvants est comprise entre 60 et 100 %m., de préférence entre 70 et 90 %m., et la proportion d'eau et /ou de vapeur d'eau par rapport au mélange de solvants est comprise entre 50 et 150 %m., de préférence entre 80 et 120 %m., sont choisies de façon à favoriser l'évaporation de l'azéotrope.

Du 1,3-dioxolane peut également être ajouté à l'étape (d) si nécessaire.

Selon un mode de réalisation préféré, l'étape (d) est suivie d'une étape supplémentaire (e) de nettoyage à la vapeur (« stripping ») des grains de polycarbonate issus de l'étape (d), généralement présents dans un mélange comprenant principalement de l'eau. Cela s'effectue généralement dans le même réacteur que celui utilisé pour l'étape (d). Cette étape (e), qui réalise l'entraînement du mélange des solvants résiduels typiquement adsorbé sur les grains de polycarbonate, est généralement effectuée à température de 90 à 110°C, au moyen de vapeur d'eau, ainsi qu'il est connu de la personne du métier. Cela permet une meilleure récupération, et donc un meilleur recyclage en particulier interne, du 1-3-dioxolane (par exemple pour alimenter en effluent gazeux une éventuelle étape (g) de condensation qui est suivie d'une récupération du 1,3 -dioxolane pour l'étape (b) qui sera suivie de l'étape (d)). Cela permet surtout d'obtenir des grains de polycarbonate plus purs pour les réutiliser ultérieurement.

De manière optionnelle, le procédé comprend en outre une étape supplémentaire (f) de séchage des grains de polycarbonate issus de l'étape (e). Ce séchage peut être opéré de façon traditionnelle ainsi qu'il est connu de la personne du métier par exemple dans un sécheur à lit fluidisé.

Selon un mode de réalisation, l'étape (d) est suivie d'une étape (g) de condensation de l'effluent gazeux issu de l'étape (d) conduisant à l'obtention d'un effluent liquide aqueux et d'un effluent liquide organique. L'étape (g) est effectuée après l'étape (d) et indépendamment des étapes (e) et/ou (f).

De préférence, l'effluent liquide aqueux issu de l'étape (g) alimente l'étape (d) en eau sous forme liquide et/ou vapeur, de préférence liquide.

De préférence, l'effluent liquide organique issu de l'étape (g) alimente l'étape (b) en 1,3-dioxolane et éventuellement l'étape (d) en 1,3-dioxolane si nécessaire.

Selon un mode de réalisation, l'étape (g) traite plus généralement tout effluent gazeux de stripping.

Ainsi, de préférence, l'effluent gazeux de l'étape de nettoyage à la vapeur des fragments insolubles issue de l'étape (c) alimente l'étape (g). De même, l'effluent gazeux de l'étape (e) de nettoyage à la vapeur des grains de polycarbonate issus de l'étape (c) alimente de préférence l'étape (g).

Toutes ces étapes de recyclage interne permettent avantageusement une meilleure autonomie du procédé, et donc une utilisation plus écoresponsable dudit procédé.

### Description sommaire des figures

La manière de réaliser l'invention, ainsi que les avantages qui en découlent, ressortent de la description du mode de réalisation qui suit, à l'appui de la figure annexée dans laquelle :

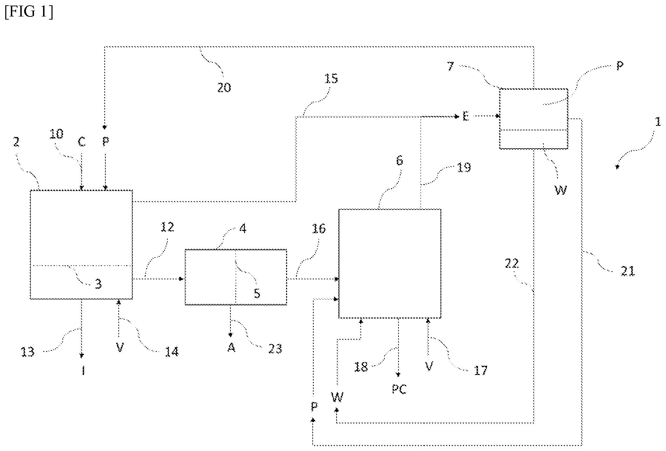

[Fig. 1] La figure 1 est une vue schématique du principe de fonctionnement du procédé de l'invention.

Bien entendu, les dimensions et les proportions des éléments illustrés sur la figure 1 ont pu être exagérées par rapport à la réalité, et n'ont été données que dans le but de faciliter la compréhension de l'invention.

### Description détaillée de la figure

Le dispositif **1** est utilisé pour mettre en œuvre le procédé selon l'invention tel que représenté schématiquement sur la figure 1.

Il comprend un réacteur **2** dans lequel sont disposés les morceaux de déchets composites **C** à traiter par le procédé. Les morceaux **C** peuvent avoir été fournis tels quels ou sont issus d'une étape de broyage (non représentée). Dans ce dernier cas, ils sont apportés par une conduite **10** dans le réacteur **2** (étape (a)). Dans le réacteur **2,** les morceaux **C** sont dissous en présence d'un mélange de solvants **P** contenant majoritairement du 1,3-dioxolane et apporté par une conduite **20.**

Sur la figure 1, il est procédé simultanément aux étapes (b) et (c) dans le même réacteur **2** et dans un espace **4.** La pièce **3** symbolise la séparation qui est effectuée au sein du réacteur **2** consistant en une filtration primaire. À partir du réacteur **2,** une conduite **12** apporte l'effluent liquide vers l'espace **4** muni d'une pièce **5** symbolisant la séparation qui est effectuée au sein de l'espace **4.** L'espace **4** correspond à un système de filtration supplémentaire. À partir de l'espace **4,** une conduite **16** apporte l'effluent liquide filtré vers un réacteur **6.** Un composant des déchets composites tel qu'un insert ou une pièce métallique **A** peut également être évacué au moyen d'une conduite **23** depuis l'espace **4.**

Il est possible d'apporter de nouveau du mélange de solvants **P** dans le réacteur **2** pour une étape optionnelle de rinçage des fragments insolubles.

En outre, après cette étape optionnelle ou sans cette étape optionnelle, les fragments insolubles **I** sont préférentiellement strippés grâce à de la vapeur **V** provenant d'une conduite **14.** Depuis le réacteur **2,** l'effluent gazeux **E** est alors de préférence condensé dans un espace **7** dédié auquel il est apporté par une conduite **15.** Une fois les fragments insolubles **I** débarrassés de toute trace de solvant, ils sont évacués par une conduite **13.** Ce stripping peut être effectué au sein du réacteur **2** comme cela est représenté sur la figure 1, mais également au sein de l'espace **4** (non représenté).

Dans le réacteur **6,** il est procédé à la précipitation du polycarbonate **PC** présent dans l'effluent liquide. À cet effet, depuis l'espace **7,** une conduite **21** apporte du mélange de solvants **P** supplémentaire si nécessaire et une conduite **22** apporte une phase aqueuse contenant majoritairement de l'eau **W.** De la vapeur **V** est également apportée par une conduite **17** pour procéder à la précipitation du polycarbonate sous forme de grains au cours de l'étape (d), étape suivie préférentiellement d'une étape (e) de stripping dudit polycarbonate. Depuis le réacteur **6,** l'effluent gazeux **E** est condensé dans l'espace **7** auquel il est apporté par une conduite **19** donnant naissance à la phase organique liquide **P** et à la phase aqueuse liquide **W.** Une fois les grains de polycarbonate **PC** débarrassés de toute trace de solvant, ils sont évacués par une conduite **18.** Les effluents gazeux **E,** une fois condensés dans l'espace 7, peuvent être utilisés en boucle fermée par les conduites **20** et **21** pour la phase organique **P** et par la conduite **22** pour la phase aqueuse **W.**

Les grains de polycarbonate **PC** et les fragments insolubles **I** (qui peuvent par exemple être du métal) peuvent être avantageusement valorisés, car ils sont de haute pureté.

### Exemples

### Exemple 1

Il a été procédé à une dissolution-précipitation sélective de cartes d'identités en polycarbonate en présence de 1,3-dioxolane. Des cartes d'identité broyées en morceaux de taille moyenne de quelques centimètres de côté et de faible épaisseur ont été fournies et mélangées en quantité de 10 g, et mises en présence de 200 g de 1,3-dioxolane. L'ensemble a été agité à 60°C pendant deux heures. Il a ensuite été procédé à une filtration à chaud qui a conduit à l'obtention de trois phases distinctes : une phase de métaux (fibres de cuivre et puces électroniques), une phase de polycarbonate en solution et une phase de revêtement (vernis).

Ce test à petite échelle a permis de prouver la faisabilité et l'efficacité du procédé selon l'invention.

### Exemple 2

Il a été procédé de même qu'à l'exemple 1 à une dissolution-précipitation sélective de cartes d'identités en polycarbonate en présence de 1,3-dioxolane à une échelle plus importante.

Pour cela, des morceaux de cartes d'identité broyées en quantité de 500 g ont été mélangés à 3 kg de 1,3-dioxolane sous agitation à 60° pendant 45 minutes. Après filtration, il a été produit trois phases : du polycarbonate en solution, du revêtement (vernis) et des métaux (fibres de cuivre et puces électroniques).

Les métaux ont été rincés avec le 1,3-dioxolane puis strippés à la vapeur d'eau et enfin séchés.

La solution de polycarbonate (3,4 kg) obtenue a été injectée dans un réacteur agité à une vitesse de 700 rpm (tours/minute) et au sein duquel la température est passée de 20°C à l'instant initial à 100°C au bout de 2h15, en 2 étapes avec régulation à 60°C puis régulation à 100°C. Au bout de 45 minutes, de la vapeur a été ajoutée à un taux de 1,5 kg par heure.

La précipitation a commencé à se produire à partir de 40 minutes jusqu'à deux heures. De l'isohexane (solvant dit « principal » ; agent hydrophobe) et de l'isopropanol (solvant supplémentaire ; agent dispersant) ont été ajoutés dès le départ, respectivement en proportion de 15% et 4% ; en poids par rapport au poids total de solvants (1,3-dioxolane, eau, isohexane et isopropanol). Cela a permis de précipiter le polycarbonate sous forme de poudre.

Le mélange solide - liquide a alors été filtré puis séché. La poudre de polycarbonate récupérée au final était d'une grande pureté.

Ce test à plus grande échelle a permis de prouver l'efficacité du procédé selon l'invention.

## Revendications

1. Procédé de recyclage de déchets composites à base de polycarbonate comprenant les étapes suivantes :
(a) fourniture des déchets composites sous forme de morceaux (C) ;
(b) dissolution des morceaux (C) de déchets en présence de 1,3-dioxolane (P) en tant que solvant, à température de 50°C à 100°C, sous atmosphère inerte à une pression de 20 000 à 300 000 Pa ;
(c) séparation (3,5) du mélange issu de l'étape (b) conduisant à récupérer des fragments insolubles (I) ainsi qu'un liquide comprenant du solvant et du polycarbonate;
(d) précipitation du polycarbonate (PC) présent dans le liquide issu de l'étape (c), à température de 50°C à 100°C, sous atmosphère inerte à une pression de 20 000 à 100 000 Pa, en présence d'eau sous forme liquide (W) et/ou de vapeur (V) et d'au moins un solvant (P), permettant d'obtenir un effluent gazeux (E) et des particules solides de polycarbonate (PC).

2. Procédé selon la revendication 1, tel que l'étape (c) de séparation est une étape de filtration.

3. Procédé selon l'une des revendications 1 ou 2, tel que l'étape (c) peut comprendre plusieurs sous-étapes de filtration.

4. Procédé selon l'une des revendications 1 à 3, tel que l'étape (c) permet en outre de récupérer au moins un composant (A) des déchets composites.

5. Procédé selon l'une des revendications 1 à 4, dans lequel les étapes (b) et (c) sont successives.

6. Procédé selon l'une des revendications 1 à 5, dans lequel les fragments insolubles (I) issues de l'étape (c) sont nettoyés par rinçage avec un solvant puis par évaporation et/ou distillation de façon à éliminer toute trace de 1,3-dioxolane.

7. Procédé selon l'une des revendications 1 à 6, tel que le solvant (P) de l'étape (d) est un alcane choisi dans le groupe formé par l'isohexane, l'hexane, l'heptane, l'octane et le pentane, de préférence le solvant (P) est l'isohexane.

8. Procédé selon la revendication 7, tel que le solvant (P) de l'étape (d) comprend en outre un solvant supplémentaire choisi dans le groupe formé par l'isopropanol, l'acétate de propyle, le 2-méthyl-1,3-dioxolane et le diméthoxyéthane, de préférence le solvant supplémentaire est l'isopropanol.

9. Procédé selon l'une des revendications 1 à 8, tel que l'étape (d) est suivie d'une étape supplémentaire (e) de nettoyage à la vapeur des grains de polycarbonate issus de l'étape (d).

10. Procédé selon la revendication 9, tel qu'il comprend en outre une étape supplémentaire (f) de séchage des grains de polycarbonate issus de l'étape (e).

11. Procédé selon l'une des revendications 1 à 10, tel que l'étape (d) est suivie d'une étape (g) de condensation de l'effluent gazeux issu de l'étape (d) conduisant à l'obtention d'un effluent liquide aqueux (W) et d'un effluent liquide organique (P).

12. Procédé selon la revendication 11, tel que l'effluent liquide aqueux issu de l'étape (g) alimente l'étape (d) en eau sous forme liquide (W) et/ou vapeur (V), de préférence liquide (W).

13. Procédé selon l'une des revendications 11 ou 12, tel que l'effluent liquide organique (P) issu de l'étape (g) alimente l'étape (b) en 1,3-dioxolane et éventuellement l'étape (d) en 1,3-dioxolane si nécessaire.

14. Procédé selon l'une des revendications 11 à 13, tel que l'effluent gazeux de l'étape de nettoyage à la vapeur des fragments insolubles **I** issus de l'étape (c) alimente l'étape (g).

15. Procédé selon l'une des revendications 11 à 14, tel que l'effluent gazeux de l'étape (e) de nettoyage à la vapeur des grains de polycarbonate issus de l'étape (c) alimente l'étape (g).

## Patentansprüche

1. Verfahren zum Recycling von Verbundabfällen auf Polycarconatbasis, das folgende Schritte umfasst:
(a) Bereitstellung von Verbundabfall in stückiger Form (C);
(b) Auflösen der Stücke (C) des Abfalls in Gegenwart von 1,3-Dioxolan (P) als Lösungsmittel bei einer Temperatur von 50°C bis 100°C in inerter Atmosphäre bei einem Druck von 20.000 bis 300.000 Pa;
(c) Trennen (3,5) des Gemisches aus Schritt (b), was zur Gewinnung von unlöslichen Fragmenten (I) und einer Flüssigkeit führt, die Lösungsmittel und Polycarbonat enthält;
(d) Ausfällung des Polycarbonats (PC), das in der Flüssigkeit aus Schritt (c) vorhanden ist, bei einer Temperatur von 50°C bis 100°C, in inerter Atmosphäre bei einem Druck von 20.000 bis 100.000 Pa, in Gegenwart von Wasser in flüssiger Form (W) und/oder Dampf (V) und mindestens einem Lösungsmittel (P), wodurch man einen gasförmigen Effluenten (E) und feste Teilchen aus Polycarbonat (PC) erhält.

2. Verfahren nach Anspruch 1, bei dem der Schritt (c) der Trennung ein Filtrationsschritt ist.

3. Verfahren nach einem der Ansprüche 1 oder 2, bei dem der Schritt (c) mehrere Filtrationsunterschritte umfassen kann.

4. Verfahren nach einem der Ansprüche 1 bis 3, bei dem in Schritt (c) zusätzlich mindestens eine Komponente (A) aus dem Verbundabfall zurückgewonnen wird.

5. Verfahren nach einem der Ansprüche 1 bis 4, wobei die Schritte (b) und (c) aufeinander folgen.

6. Verfahren nach einem der Ansprüche 1 bis 5, bei dem die unlöslichen Fragmente (I) aus Schritt (c) durch Spülen mit einem Lösungsmittel und anschließender Verdampfung und/oder Destillation gereinigt werden, sodass alle Spuren von 1,3-Dioxolan entfernt werden.

7. Verfahren nach einem der Ansprüche 1 bis 6, bei dem das Lösungsmittel (P) von Schritt (d) ein Alkan ist, das aus der Gruppe bestehend aus Isohexan, Hexan, Heptan, Octan und Pentan ausgewählt ist, wobei das Lösungsmittel (P) vorzugsweise Isohexan ist.

8. Verfahren nach Anspruch 7, bei dem das Lösungsmittel (P) von Schritt (d) zusätzlich ein weiteres Lösungsmittel umfasst, das aus der Gruppe bestehend aus Isopropanol, Propylacetat, 2-Methyl-1,3-dioxolan und Dimethoxyethan ausgewählt ist, wobei das weitere Lösungsmittel vorzugsweise Isopropanol ist.

9. Verfahren nach einem der Ansprüche 1 bis 8, bei dem ein weiterer Schritt (e) auf Schritt (d) folgt, bei dem die Polycarbonatkörner aus Schritt (d) mit Dampf gereinigt werden.

10. Verfahren nach Anspruch 9, das außerdem einen weiteren Schritt (f) der Trocknung der Polycarbonatkörner aus Schritt (e) umfasst.

11. Verfahren nach einem der Ansprüche 1 bis 10, bei dem auf Schritt (d) ein Schritt (g) der Kondensation des gasförmigen Effluents aus Schritt (d) folgt, der zum Erhalt eines wässrigen flüssigen Effluents (W) und eines organischen flüssigen Effluents (P) führt.

12. Verfahren nach Anspruch 11, bei dem der wässrige flüssige Effluent aus Schritt (g) dem Schritt (d) Wasser in flüssiger (W) Form und/oder in Form von Dampf (V), vorzugsweise in flüssiger Form (W), zuführt.

13. Verfahren nach einem der Ansprüche 11 oder 12, bei dem der organische flüssige Effluent (P) aus Schritt (g) dem Schritt (b) und eventuell, wenn erforderlich, dem Schritt (d) 1,3-Dioxolan zuführt.

14. Verfahren nach einem der Ansprüche 11 bis 13, bei dem der gasförmige Effluent aus dem Schritt der Dampfreinigung der unlöslichen Fragmente I aus Schritt (c) den Schritt (g) versorgt.

15. Verfahren nach einem der Ansprüche 11 bis 14, bei dem der gasförmige Effluent aus dem Schritt (e) der Dampfreinigung der Polycarbonatkörner aus Schritt (c) den Schritt (g) versorgt.

## Claims

1. A method for recycling polycarbonate-based composite waste comprising the following steps:
(a) providing the composite waste in lump form (C);
(b) dissolving the waste lumps (C) in the presence of 1,3-dioxolane (P) as solvent, at a temperature of 50°C to 100°C, in an inert atmosphere at a pressure of 20,000 to 300,000 Pa;
(c) separation (3,5) of the mixture from step (b), leading to the recovery of insoluble fragments (I) as well as a liquid comprising the solvent and the polycarbonate;
(d) precipitation of the polycarbonate (PC) present in the liquid from step (c), at a temperature of 50°C to 100°C, in an inert atmosphere at a pressure of 20,000 to 100,000 Pa, in the presence of water in liquid (W) and/or vapor (V) form and at least one solvent (P), to obtain a gaseous effluent (E) and solid particles of polycarbonate (PC).

2. The method according to claim 1, wherein separation step (c) is a filtration step.

3. The method according to any of claims 1 or 2, wherein step (c) may comprise several filtration sub-steps.

4. The method according to any of claims 1 to 3, wherein step (c) also recovers at least one component (A) from the composite waste.

5. The method according to any of claims 1 to 4, wherein steps (b) and (c) are successive.

6. The method according to any of claims 1 to 5, wherein the insoluble fragments (I) from step (c) are cleaned by rinsing with a solvent followed by evaporation and/or distillation so as to remove all traces of 1,3-dioxolane.

7. The method according to any of claims 1 to 6, wherein the solvent (P) of step (d) is an alkane selected from the group formed by isohexane, hexane, heptane, octane, and pentane, preferably the solvent (P) is isohexane.

8. The method according to claim 7, wherein the solvent (P) of step (d) further comprises an additional solvent selected from the group formed by isopropanol, propyl acetate, 2-methyl-1,3-dioxolane, and dimethoxyethane, preferably the additional solvent is isopropanol.

9. The method according to one of claims 1 to 8, wherein step (d) is followed by an additional step (e) of steam cleaning the polycarbonate grains resulting from step (d).

10. The method according to claim 9, including a supplemental step (f) for drying the polycarbonate grains produced in step (e).

11. The method according to any of claims 1 to 10, wherein step (d) is followed by a step (g) of condensation of the gaseous effluent from step (d), resulting in an aqueous liquid effluent (W) and an organic liquid effluent (P).

12. The method according to claim 11, wherein the aqueous liquid effluent from step (g) is fed to step (d) with water in liquid (W) and/or vapor (V) form, preferably liquid (W).

13. The method according to any of claims 11 or 12, wherein the organic liquid effluent (P) from step (g) is fed to step (b) with 1,3-dioxolane and optionally step (d) with 1,3-dioxolane if necessary.

14. The method according to any of claims 11 to 13, wherein the gaseous effluent from the insoluble fragments stripping step I of step (c) is fed to step (g).

15. The method according to any of claims 11 to 14, wherein the effluent gas from step (e) of the polycarbonate grains stripping step from step (c) is fed to step (g).
